# EUROPÄISCHE PATENTSCHRIFT

(11) **EP 2 633 978 B1**
(45) Veröffentlichungstag und Bekanntmachung des Hinweises auf die Patenterteilung: **09.09.2015**
(21) Anmeldenummer: 13157276.0
(22) Anmeldetag: 28.02.2013
(51) Int. Cl.: B29C 49/42, B65G 47/34

(54) **Preformtransport mit individueller Auswurfmöglichkeit**
Preform transport with individual ejection facility
Transport de préforme avec possibilité d'éjection individuelle

(30) Priorität: 29.02.2012 DE 102012101653
(43) Veröffentlichungstag der Anmeldung: 04.09.2013
(73) Patentinhaber: Krones AG, 93073 Neutraubling (DE)
(72) Erfinder: Stein, Marcus, 93073 Neutraubling (DE); Schönberger, Wolfgang, 93073 Neutraubling (DE)
(74) Vertreter: Bittner, Bernhard

(56) Entgegenhaltungen:
- EP-A1- 1 922 272
- DE-A1- 19 746 150
- DE-A1-102008 008 528
- DE-A1-102009 004 819
- DE-A1-102010 028 984

## Beschreibung

Die vorliegende Erfindung bezieht sich auf eine Vorrichtung zum Transportieren von Kunststoffvorformlingen. Derartige Kunststoffvorformlinge werden im Stand der Technik eingesetzt, um durch Blasdruckbeaufschlagung zu Kunststoffbehältnissen expandiert zu werden. Zu diesem Zweck werden die Kunststoffvorformlinge zunächst in einem Ofen, insbesondere in einem Infrarot- oder Mikrowellenofen, erwärmt, um anschließend in diesem erwärmten Zustand expandiert zu werden.

Zu diesem Zweck werden die Kunststoffvorformlinge üblicherweise an Greifelementen gehalten und von diesen Greifelementen durch den Ofen transportiert. Für den fehlerfreien und sicheren Betrieb der Erwärmungseinrichtung ist eine exakte Lage der Kunststoffvorformlinge erforderlich. Insbesondere bei den zunehmend kleinbauenden Vorrichtungen können zum Beispiel schiefe Lagen der Vorformlinge zu Zerstörungen oder Beschädigungen der Heizelemente führen. Leider kann eine solche exakte Lage der Kunststoffvorformlinge nicht zu jeder Zeit garantiert werden. Der vorliegenden Erfindung liegt daher die Aufgabe zugrunde, einen sicheren Betrieb, insbesondere derartiger Heizvorrichtungen zum Erwärmen von Kunststoffvorformlingen, sicherzustellen. Insbesondere soll die Erfindung eine Möglichkeit schaffen, das Abziehen von fehlerhaft sitzenden Kunststoffvorformlingen bzw. den Auswurf derselben zu ermöglichen. Dies soll insbesondere auch unter der Vorgabe von hohen Maschinenleistungen ermöglicht werden und insbesondere soll dabei auch gewährleitstet werden, dass etwaige vorausgehende und nachfolgende Kunststoffvorformlinge nicht ebenfalls beeinträchtigt werden. Daneben sollen diese Aufgaben auch in sicherer und preisgünstiger Weise gelöst werden.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Transportieren von Kunststoffvorformlingen weist eine Vielzahl von Halteeinrichtungen auf, welche in die Mündungen der Kunststoffvorformlinge eingreifen und diese halten. Dabei sind diese Halteeinrichtungen - insbesondere an einem Träger - entlang eines vorgegebenen Transportpfades bewegbar. Weiterhin ist ein Bewegungsmechanismus vorgesehen, der bewirkt, dass die Halteeinrichtungen zusätzlich zu der Bewegung entlang des Transportpfades auch in einer senkrecht zu diesem Transportpfad stehenden Richtung bewegbar sind. Erfindungsgemäß weist die Vorrichtung wenigstens eine Erkennungseinrichtung auf, welche geeignet ist, einen Fehlerzustand eines von einer Halteeinrichtung gehaltenen Kunststoffvorformlings zu erkennen sowie weiterhin wenigstens eine entlang des Transportpfades der Erkennungseinrichtung nachgeordnete erste Entfernungsvorrichtung, die in Reaktion auf ein Signal der Erkennungseinrichtung die individuelle Entfernung dieses Kunststoffvorformlings von der ihn haltenden Halteeinrichtung ermöglicht und/oder mindestens eine entlang des Transportpfads (P) der Erkennungseinrichtung (40) nachgeordnete erste (Positions)korrektureinrichtung, die in Reaktion auf ein Signal der Erkennungseinrichtung eine Positionskorrektur dieses Kunststoffvorformlings gegenüber der ihn haltenden Halteeinrichtung ermöglicht.

Üblicherweise kann ein Kunststoffvorformling insbesondere über einen Reibschluss an einem Greifer gehalten werden. Bei der Übergabe des Kunststoffvorformlings, beispielsweise von einem Sägezahn, an einen Ofen taucht der Preformgreifer, hier als Halteeinrichtung bezeichnet, von oben in den Kunststoffvorformling ein, und fährt dann zusammen mit dem Kunststoffvorformling wieder nach oben. Gesteuert wird dies üblicherweise über die sogenannte Steuerkurve, auf der eine Rolle per Federkraft angedrückt wird. Die Steuerkurve ist fest montiert, wohingegen üblicherweise die genannten Teile wie die Halteeinrichtungen beweglich und insbesondere auch drehbar gelagert sind. Dadurch kann die Rolle eine Steuerbahn abfahren und vollzieht dabei so Hübe, die zum Anpassen des gewünschten Höhenniveaus nötig sind. Über einen Formschluss werden diese Hübe auch in der Spindel und damit auch im Preformgreifer vollzogen.

Ein großes Problem bei dem Betrieb einer derartigen Maschine stellen beispielsweise schräg oder zu tief sitzende Kunststoffvorformlinge dar. Dies kann auf unterschiedlichste Art und Weise bei der Übergabe geschehen. Außerdem kann auch der Kunststoffvorformling selbst hinsichtlich seiner äußeren Form nicht exakt rotationssymmetrisch ausgeführt sein. Diese Schiefstellung führt ebenfalls zu einem ungleichmäßigen Erhitzungsprofil. Da die Kunststoffvorformlinge bei der Erwärmung in eine Rotationsbewegung versetzt werden, kommt es zusätzlich zu einem Taumeln der schräg sitzenden Kunststoffvorformlinge. Dies kann, wie oben erwähnt, zu einer Beschädigung von Heizstrahlern führen oder der Kunststoffvorformling kann sich, wie bei dem zu tief sitzenden Kunststoffvorformling auch, schlimmstenfalls von dem Greifer lösen und in einen Heiztunnel fallen.

Die Erfindung schlägt daher vor, dass derartige Fehlerzustände zunächst erfasst werden und anschließend der Kunststoffvorformling von seiner Halteeinrichtung getrennt wird. Unter einem Fehlerzustand wird damit einerseits ein schlecht, beispielsweise schief sitzender Kunststoffvorformling verstanden, andererseits jedoch auch ein an sich fehlerhafter Kunststoffvorformling, etwa ein Kunststoffvorformling mit einem gekrümmten Grundkörper oder einer nicht normgerechten Mündung.

Vorteilhaft weist die Vorrichtung eine Erwärmungseinrichtung auf, welche die Kunststoffvorformlinge während ihres Transports erwärmt. Dabei sind vorteilhaft die hier beschriebene Erkennungseinrichtung sowie besonders bevorzugt auch die Entfernungsvorrichtung vor dieser Erwärmungseinrichtung angeordnet und besonders bevorzugt unmittelbar vor dieser Erwärmungseinrichtung.

Vorteilhaft ist wenigstens die Erkennungseinrichtung und/oder die Entfernungseinrichtung an einem Abschnitt angeordnet, an dem die Kunststoffvorformlinge entlang eines kreissegmentförmigen Transportpfades geführt werden.

Der oben erwähnte Träger kann beispielsweise eine umlaufende Transportkette sein, an der die einzelnen Halteeinrichtungen angeordnet sind. Dabei kann diese Kette endseitige Umlenkräder aufweisen.

Bei einer weiteren vorteilhaften Ausführungsform ist eine Dreheinrichtung vorgesehen, welche die Kunststoffvorformlinge um ihre Längsrichtung dreht.

Die Erkennungseinrichtung kann dabei in unterschiedlicher Weise ausgestaltet sein. So kann beispielsweise eine Kamera vorgesehen sein, welche eine Fehlpositionierung der Kunststoffvorformlinge oder auch einen fehlerhaften Kunststoffvorformling erkennt. Auch kann es sich bei der Erkennungseinrichtung um ein mechanisches Element handeln, an welches beispielsweise der Kunststoffvorformling (wenn er falsch an der Halteeinrichtung angeordnet ist) anstößt.

Bei dem oben erwähnten Bewegungsmechanismus handelt es sich insbesondere, aber nicht ausschließlich, um eine Führungskurve, an der wiederum eine Führungsrolle abläuft, wobei durch dieses Ablaufen der Führungsrolle die oben beschriebene Bewegung der Halteeinrichtung in der zu dem Transportpfad senkrecht stehenden Richtung erreichbar ist.

Bei einer weiteren vorteilhaften Ausführungsform ist die Entfernungseinrichtung entlang des Transportpfades der Kunststoffvorformlinge stationär angeordnet. Auf diese Weise kann ein mechanisch einfacher Aufbau dieser Entfernungseinrichtung erreicht werden.

Bei einer weiteren vorteilhaften Ausführungsform ist es auch möglich, das Abziehen der Kunststoffvorformlinge über ein veränderbares Segment der oben erwähnten Führungskurve zu erreichen. Dies wird unter Bezugnahme auf die Figuren genauer erläutert. Durch die Erfindung wird daher ein Abziehen von fehlerhaft sitzenden Kunststoffvorformlingen erreicht. Dabei ist es, wie gesagt, möglich, ein schaltbares Segment in einer Steuerkurve vorzusehen, durch welches ein Kunststoffvorformling individuell ausgesondert werden kann. Unter der oben beschriebenen individuellen Entfernung des Kunststoffvorformlings wird verstanden, dass insbesondere vorausgehende und nachfolgende Kunststoffvorformlinge nicht ebenfalls mit ausgesondert werden (außer dies ist gewünscht). Es ist also möglich, gezielt spezielle Kunststoffvorformlinge auszusondern.

Bei einer weiteren vorteilhaften Ausführungsform weist die (wenigstens eine) Entfernungseinrichtung wenigstens ein Erfassungselement zum Erfassen eines Kunststoffvorformlings auf. Dabei ist dieses Erfassungselement auf den Kunststoffvorformling zustellbar. Unter einem Erfassungselement wird dabei ein Element verstanden, welches den Kunststoffvorformling mechanisch kontaktiert, insbesondere, um ihn so von der Halteeinrichtung abzuziehen. Vorteilhaft ist das Erfassungselement so gestaltet, dass es einen Bereich des Kunststoffvorformlings, beispielsweise seinen Tragring hintergreift. Ist dies geschehen, kann durch eine Aufwärtsbewegung der Halteeinrichtung der Kunststoffvorformling von der Halteeinrichtung abgezogen werden.

Es wäre jedoch auch möglich, dass anstelle der Entfernungseinrichtung eine Korrektureinrichtung vorgesehen ist, welche eine Positionierung des Kunststoffvorformlings bei Bedarf korrigiert. So wäre es möglich, dass eine derartige Korrektureinrichtung bewirkt, dass ein schlecht sitzender Kunststoffvorformling korrekt auf die ihn haltende Halteeinrichtung aufgeschoben wird.

Bei einer weiteren vorteilhaften Ausführungsform ist das (bzw. wenigstens ein) Erfassungselement zumindest auch in einer Richtung auf den Kunststoffvorformling zustellbar, welche senkrecht zu dem Transportpfad und auch senkrecht zu der oben genannten vertikalen Richtung ist. In anderen Worten wird hierbei bevorzugt das Erfassungselement seitlich bzw. transversal auf den Transportpfad der Kunststoffvorformlinge zugestellt. Weiterhin ist das Erfassungselement vorteilhaft so gestaltet, dass es ein Zustellen auf lediglich einen bestimmten Kunststoffvorformling erlaubt und anschließend schnell wieder zurückgezogen werden kann, sodass die nachfolgenden Kunststoffvorformlinge nicht tangiert werden.

Bei einer weiteren vorteilhaften Ausführungsform ist das erste Erfassungselement um eine vorgegebene Schwenkachse schwenkbar. Vorteilhaft ist dabei diese erste Schwenkachse parallel zu der Achse bzw. der Richtung, in der auch die Halteeinrichtungen bewegbar sind. Insbesondere handelt es sich hierbei um eine Längsrichtung der Kunststoffvorformlinge.

Bei einer vorteilhaften Entfernungseinrichtung ist ein zweites Erfassungselement vorgesehen, wobei diese beiden Erfassungselemente gemeinsam den entlang seines Transportpfades bewegten Kunststoffvorformling zwischen sich aufnehmen. So können beispielsweise diese beiden Erfassungselemente auf beiden Seiten des Preforms oberhalb des Tragrings eingreifen und alsdann die Halteeinrichtung abgezogen werden.

Bei einer weiteren vorteilhaften Ausführungsform ist eine Kopplungseinrichtung vorgesehen, welche die Bewegungen der Erfassungselemente miteinander koppelt. Auf diese Weise können die Elemente beidseitig auf den Kunststoffvorformling zugestellt werden und so ist ebenfalls ein schnelles, individuelles Abziehen eines einzelnen Kunststoffvorformlings möglich. Bei dieser Kopplungseinrichtung kann es sich beispielsweise um ein Getriebe handeln. Es wäre jedoch auch eine elektronische Kopplung (etwa über Servoantriebe) möglich.

Vorteilhaft ist zur Erzeugung der Bewegung der Erfassungselemente eine Antriebseinrichtung vorgesehen. Bei dieser Antriebseinrichtung kann es sich um eine pneumatische Antriebseinrichtung, eine hydraulische Antriebseinrichtung oder auch eine elektromotorische Antriebseinrichtung oder auch eine magnetische Antriebseinrichtung handeln.

Bei einer weiteren vorteilhaften Ausführungsform bewirkt der Bewegungsmechanismus eine Bewegung der Kunststoffvorformlinge in der senkrecht zu dem Transportpfad stehenden Richtung in demjenigen Bereich des Transportpfades, in dem auch die Entfernungseinrichtung angeordnet ist. Damit ist der Bewegungsmechanismus derart gestaltet, dass das Abziehen der Kunststoffvorformlinge gerade durch diesen Bewegungsmechanismus bewirkt wird.

Bei einer weiteren vorteilhaften Ausführungsform weist die Vorrichtung eine zweite Entfernungseinrichtung zum Entfernen der Kunststoffvorformlinge auf. Vorteilhaft ist dabei diese zweite Entfernungseinrichtung der ersten Entfernungseinrichtung nachgeordnet. So könnte beispielsweise eine zweite Entfernungseinrichtung mit einer zweiten Umlenkkurve eines Heizofens angeordnet sein, sodass die Kunststoffvorformlinge in einem Zeitpunkt ausgeworfen werden, zu dem ihre Erwärmung noch nicht so weit abgeschlossen ist, dass diese nicht mehr neu verwendet werden können.

Die vorliegende Erfindung ist weiterhin auf ein Verfahren zum Transportieren von Kunststoffvorformlingen gerichtet. Dabei werden die Kunststoffvorformlinge mittels einer Vielzahl von Halteeinrichtungen, welche in Mündungen der Kunststoffvorformlinge eingreifen und diese halten, entlang eines vorgegebenen Transportpfades transportiert, wobei die Halteeinrichtungen mittels eines Bewegungsmechanismus zusätzlich zu der Bewegung entlang des Transportpfades auch in einer senkrecht zu diesem Transportpfad stehenden Richtung bewegt werden.

Erfindungsgemäß wird mittels einer Erkennungseinrichtung ein Fehlerzustand eines von einer Halteeinrichtung gehaltenen Kunststoffvorformlings erkannt und durch eine entlang des Transportpfades der Erkennungseinrichtung nachgeordnete erste Entfernungsvorrichtung in Reaktion auf ein Signal der Erkennungseinrichtung dieser Kunststoffvorformling individuell von der ihn haltenden Halteeinrichtung entfernt und/oder durch mindestens eine entlang des Transportpfads der Erkennungseinrichtung nachgeordnete erste (Positions) Korrektureinrichtung in Reaktion auf ein Signal der Erkennungseinrichtung eine Positionskorrektur dieses Kunststoffvorformlings gegenüber der ihn haltenden Halteeinrichtung durchgeführt.

Weitere Vorteile und Ausführungsformen ergeben sich aus den beigefügten Zeichnungen:

Darin zeigen:
- Fig. 1: Eine schematische Ansicht einer Anlage zum Behandeln von Behältnissen mit einer erfindungsgemäßen Vorrichtung;
- Fig. 2: eine Teilansicht einer erfindungsgemäßen Vorrichtung;
- Fig. 3: eine Detailansicht eines an einer Halteeinrichtung angeordneten Kunststoffvorformlings;
- Fig. 4a-4c: drei Darstellungen zur Veranschaulichung der Entfernung eines Kunststoffvorformlings;
- Fig. 5a, 5b: zwei Darstellungen einer Entfernungseinrichtung;
- Fig. 6a, 6b: zwei weitere Detaildarstellungen einer Entfernungsvorrichtung;
- Fig. 7a-7c: drei weitere Darstellungen eines Entfernungsvorgangs für einen Kunststoffvorformling;
- Fig. 8a-8b: zwei Darstellungen einer Entfernungsvorrichtung in einer weiteren Ausführungsform;
- Fig. 9a-9d: vier Darstellungen zur Veranschaulichung eines Entfernungsvorgangs; und
- Fig.10a - 10g: sieben Darstellungen einer erfindungsgemäßen Vorrichtung mit der Erkennungseinrichtung.

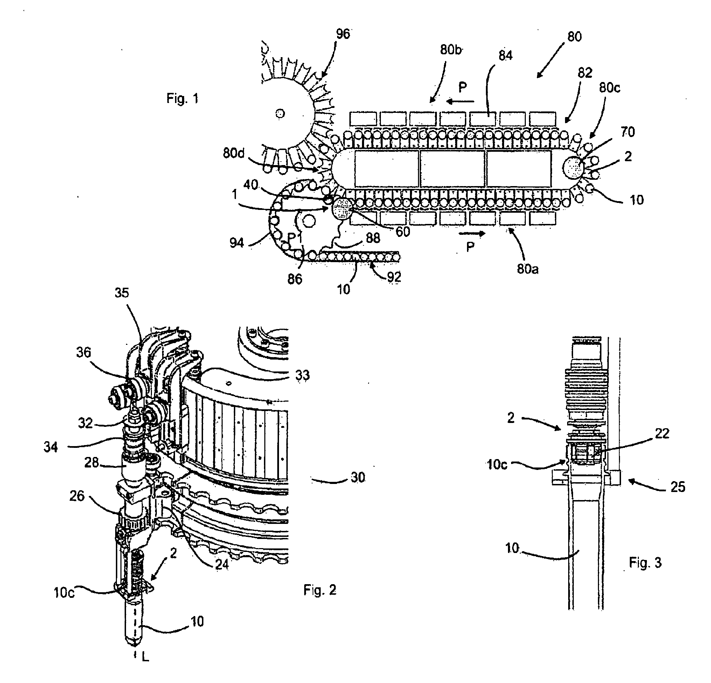

Fig. 1 zeigt eine schematische Darstellung einer erfindungsgemäßen Anlage 80 zum Behandeln von Behältnissen. Dabei ist zunächst eine Zuführeinrichtung 92 für die Kunststoffvorformlinge vorgesehen, bei der es sich beispielsweise um eine Zuführschiene handeln kann, welche die Kunststoffvorformlinge 10 direkt hintereinander fördert.

Das Bezugszeichen 86 kennzeichnet ein sogenanntes (hier als Sägezahnrad angeführtes) Eintaktrad, welches die Kunststoffvorformlinge 10 auf einen konstanten vorgegebenen Abstand bringt und weiter entlang des Pfeils P1 fördert. Das Bezugszeichen 94 kennzeichnet eine entsprechende Wandung, gegen die die Kunststoffvorformlinge 10 geführt werden. Das Bezugszeichen 88 kennzeichnet die Ausnehmungen des Eintaktrads, die zum Aufnehmen der Kunststoffvorformlinge 10 dienen.

Das Bezugszeichen 80 kennzeichnet die Anlage in ihrer Gesamtheit und das Bezugszeichen 82 eine Erwärmungsvorrichtung, die zum Erwärmen der einzelnen Kunststoffvorformlinge 10 dient. Zu diesem Zweck weist die Erwärmungsvorrichtung 82 eine Vielzahl von stationär angeordneten Heizelementen bzw. Heizkästen 84 auf. Die gesamte Vorrichtung bildet dabei eine erste Heizstrecke 80a sowie eine zweite Heizstrecke 80b aus. Zwischen diesen beiden Heizstrecken 80a, 80b ist ein Umlenkbereich 80c (in Fig. 1 rechts) vorgesehen. Die Kunststoffvorformlinge 10 werden zunächst aus dem Eintaktrad 86 in die erste Heizstrecke 80a übergeben und anschließend in Richtung des Pfeils P durch den Umlenkbereich 80c und die zweite Heizstrecke 80b transportiert. An die Erwärmungsvorrichtung 82 schließt sich eine weitere Transportvorrichtung 96 an, welche die nunmehr erwärmten Kunststoffvorformlinge 10 an eine (nicht gezeigte) Umformungseinrichtung zum Umformen von Kunststoffvorformlingen 10 zu Kunststoffbehältnissen übergibt. Bei dieser Umformungsvorrichtung handelt es sich bevorzugt um eine Blasmaschine, insbesondere eine Streckblasmaschine.

Das Bezugszeichen 40 bezieht sich auf eine Erkennungseinrichtung, welche erkennt, wenn ein Kunststoffvorformling 10 nicht korrekt an der ihm zugeordneten Halteeinrichtung 2 angeordnet ist.

Das Bezugszeichen 60 kennzeichnet eine erste Entfernungseinrichtung, die einen als fehlerhaft erkannten Kunststoffvorformling 10a von seiner Halteeinrichtung 2 entfernt. Das Bezugszeichen 1 kennzeichnet die erfindungsgemäße Vorrichtung, welche insbesondere die Erkennungseinrichtung 40 und die Entfernungseinrichtung 60 aufweist.

Das Bezugszeichen 70 kennzeichnet eine optional vorhandene zweite Entfernungseinrichtung, die in dem Umlenkbereich 80c der Kunststoffvorformlinge 10 angeordnet sein kann, um bei Bedarf Kunststoffvorformlinge 10 auch in dieser Position noch zu entfernen.

Bevorzugt erfolgt damit eine Erkennung vor dem Einlauf in die erste Heizstrecke 80a, damit ein falsch sitzender Kunststoffvorformling 10a noch davor durch einen weiteren Schritt ausgestoßen werden kann. Dies kann sowohl in dem besagten Kopfstück 80d (Fig. 1 links), kurz nach der Übergabe von dem Sägezahnstem 86 erfolgen oder aber in einem Geradeausstück nach dem Kopfstück 80d. Wie erwähnt, ist es auch denkbar, eine weitere Entfernungsvorrichtung 70 in den Umlenkbereich 80c des Heizmoduls zu platzieren, um bei einer eventuellen Störung am oder im Heizmodul oder an nachgeschalteten Maschinenteilen wie der Blasmaschine der Anlage die noch brauchbaren Kunststoffvorformlinge 10 aus den Ofen ausschleusen zu können. Grundsätzlich können die Kunststoffvorformlinge 10 bis zu einer gewissen Erwärmungstemperatur wiederverwendet werden, wenn sie sich abkühlen. Ab dieser Temperatur ist eine Wiederverwendung nicht mehr möglich und die Kunststoffvorformlinge müssen dann vernichtet werden.

Fig. 2 zeigt eine weitere Darstellung einer erfindungsgemäßen Vorrichtung. Dabei bezieht sich das Bezugszeichen 2 auf eine Halteeinrichtung, welche einen Kunststoffvorformling 10 hält. Dabei greift die Halteeinrichtung 2 über einen Haltedorn 22 in die Mündung 10c des Kunststoffvorformlings 10 ein. Der Halt erfolgt, wie oben erwähnt, insbesondere über einen Reibschluss. Die Halteeinrichtung 2 kann dabei vorteilhaft um die Längsachse L des Kunststoffvorformlings 10 gedreht werden, was beispielsweise über ein Zahnrad 26 erfolgen kann.

Das Bezugszeichen 24 kennzeichnet einen Träger, an dem die Halteeinrichtung 2 und auch der entsprechende Drehmechanismus angeordnet sind. Das Bezugszeichen 28 kennzeichnet eine Spindel und das Bezugszeichen 34 eine Feder, welche den Kunststoffvorformling 10 bei Spannung dieser Feder 34 nach oben drängen würde. Eine Nocke 32 kann von Steuerrollen 36 in der Richtung Z (welche zu der Längsrichtung L des Kunststoffvorformlings 10 parallel ist), das heißt nach oben und unten bewegt werden. Das Bezugszeichen 35 kennzeichnet einen Kopfstückauszug, der ebenfalls von einer Feder 33 nach oben vorbelastet wird. Das Bezugszeichen 30 kennzeichnet einen Träger, hier beispielsweise eine Umlenkrolle, an der eine Vielzahl der besagten Halteeinrichtungen 2 aufeinanderfolgend angeordnet ist. Dabei können diese Halteeinrichtungen 2 in der Art einer Kette miteinander verbunden sein. Damit werden die Halteeinrichtungen 2 in diesem Bereich ihres Transportpfades entlang einer kreisförmigen Bahn bewegt.

Über (nicht gezeigte) Führungskurven können die Steuerrollen 36 geführt werden und damit, je nach Anordnung der Führungskurve, kann der Kunststoffvorformling 10 nach unten gedrückt oder nach oben gezogen werden.

Fig. 3 zeigt eine weitere Ausführungsform der erfindungsgemäßen Vorrichtung. Hier ist ebenfalls wieder der Haltedorn 22, der ein Bestandteil der Halteeinrichtung 2 ist, sichtbar. Das Bezugszeichen 25 kennzeichnet eine Abschirmeinrichtung, welche eine Mündung des Kunststoffvorformlings 10c während des Durchlaufs durch den Ofen abdeckt, so dass eine übermäßige Erwärmung der Mündung 10c verhindert wird.

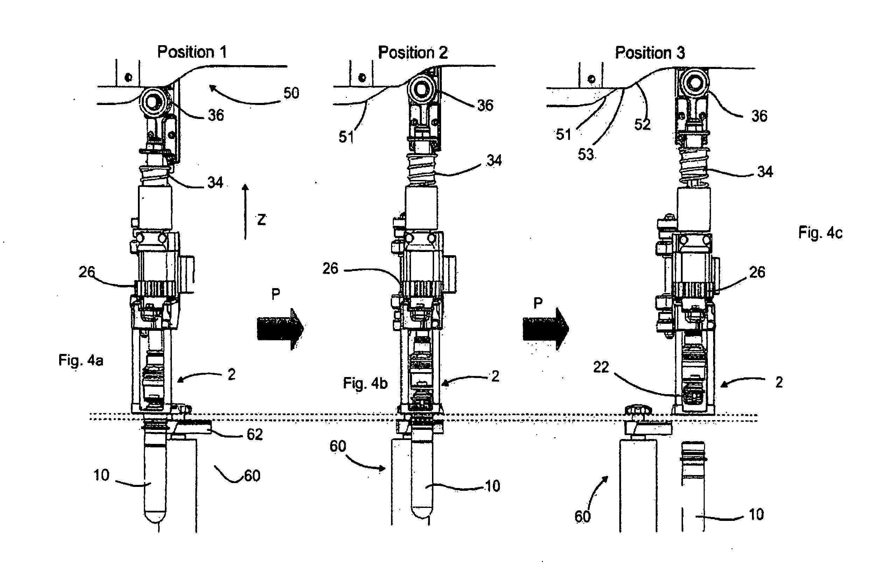

Figuren 4a bis 4c veranschaulichen einen Entfernungsvorgang eines Kunststoffvorformlings 10. Dabei ist zunächst ein Bewegungsmechanismus 50, wie hier eine Führungskurve, vorgesehen, welche bei der in den Figuren 4a bis 4c gezeigten Ausführungsform drei Kurvensegmente 51, 52 und 53 aufweist.

Das Bezugszeichen 60 bezieht sich auf eine Entfernungseinrichtung, welche den Kunststoffvorformling von seiner Halteeinrichtung 2 entfernen kann. Man erkennt in den drei Figuren 4a bis 4c, dass der Kunststoffvorformling hier von links nach rechts (entlang des Transportpfades P) an der Entfernungsvorrichtung 60 vorbeigeführt wird. Die Entfernungsvorrichtung 60 weist zwei Erfassungselemente 62, 64 (nur 62 sichtbar) auf, welche den Kunststoffvorformling 10, insbesondere dessen Tragring 10b in einer bestimmten Position (vgl. Fig. 4b) hintergreifen. Wenn in dieser Position die Halteeinrichtung 2 nach oben, das heißt in Richtung Z angehoben wird, wird sich der Kunststoffvorformling 10 von der Halteeinrichtung 2 lösen, wie in Fig. 4c gezeigt, da sich die Tragringfläche des fehlerhaft sitzenden Kunststoffvorformlings 10 unterhalb der Fläche der Erfassungselemente 62,64 der Entfernungsvorrichtung 60 befindet.

Grundsätzlich wären nun mehrere Möglichkeiten denkbar, um die Entfernung eines einzelnen Kunststoffvorformlings zu erreichen. Einerseits könnte, wie unten genauer erläutert wird, das Erfassungselement 62 auf den Kunststoffvorformling zugestellt werden und nur in diesem zugestellten Zustand würde der Kunststoffvorformling abgezogen werden. Andererseits wäre es auch möglich, die Bewegungseinrichtung bzw. Steuerkurve 50 so anzupassen, dass der Kunststoffvorformling gerade in dem Zeitraum, in dem die Erfassungseinrichtung 62 ihn hintergreift, angehoben wird. Wie gesagt, ist es erforderlich, falsch sitzende bzw. fehlerhafte Kunststoffvorformlinge zu entfernen. Dies erfolgt bei der in den Figuren 4a bis 4c gezeigten Ausführungsform mit dem Kurvenverlauf der Steuerkurve 50 und den zwei schaltbaren Erfassungselementen bzw. Abziehbacken 62, 64. Im Normalfall, das heißt bei korrektem Sitz eines Kunststoffvorformlings sind die beiden Erfassungselemente 62, 64 offengestellt. Wird durch ein vorgelagertes Überprüfungs- bzw. Erkennungssystem 40 der Kunststoffvorformling als schlecht oder schlecht sitzend erkannt, fahren die Erfassungselemente 62, 64 über einen beispielsweise mit Pneumatik betriebenen Zylinder zusammen. Die Steuerrolle 36 folgt der Bahn auf der Steuerkurve 50, an dessen Ende eine Steigung eingefügt wurde. In dieser Steigung findet dann der Abzug der Kunststoffvorformlinge statt. Sind die Erfassungselemente 62, 64 offen, laufen die Kunststoffvorformlinge ohne Beeinträchtigung hindurch. Bei geschlossenen Erfassungselementen 62, 64 stößt, wie oben erwähnt, der Tragring des Kunststoffvorformlings 10 auf die Unterseite dieser Erfassungselemente 62, 64 bzw. Abziehbacken 62, 64 und wird abgezogen. Der Vorteil dieser Vorgehensweise liegt bei den sehr günstigen Kräfteverhältnissen. Der Antrieb des Schaltsegments muss keine zusätzlichen Kräfte zum Drücken einer Feder oder ähnlichem aufbringen.

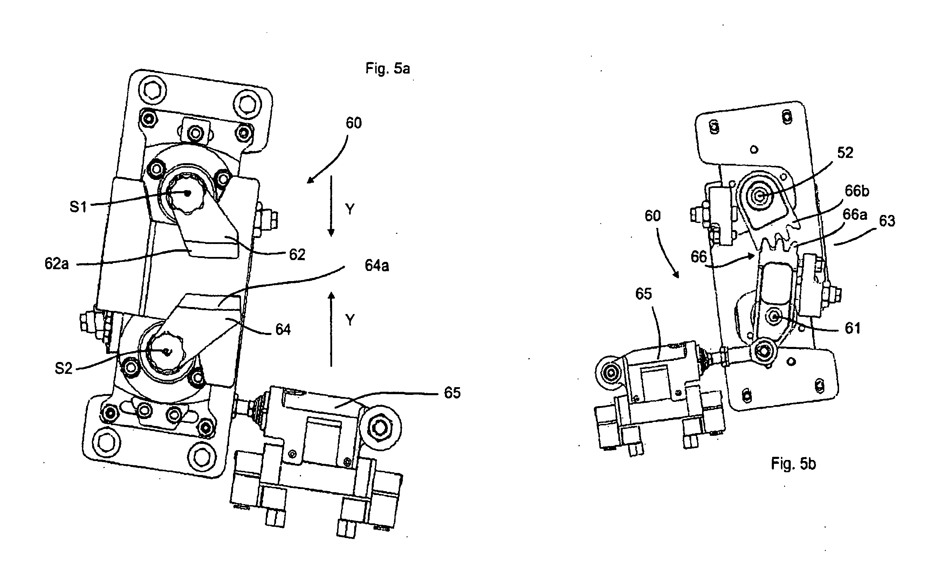

Die Figuren 5a, 5b zeigen eine erfindungsgemäße Entfernungsvorrichtung 60. Man erkennt wieder die beiden Erfassungselemente 62 und 64 bzw. Kontaktabschnitte 62a, 64a, welche den Tragring 10b des Kunststoffvorformlings hintergreifen. Man erkennt, dass diese Flächen 62a, 64a abgeschrägt sind, um gleichzeitig einen Kontakt des Gewindebereichs des Kunststoffvorformlings zu vermeiden. Das Bezugszeichen Y kennzeichnet die Richtung, in der die Erfassungselemente 62, 64 auf die Kunststoffvorformlinge zustellbar sind.

Die Bezugszeichen S1 und S2 kennzeichnen Schwenkachsen, um welche die beiden Erfassungselemente 62, 64 geschwenkt werden können, um auf diese Weise den Tragring 10b des Kunststoffvorformlings zu hintergreifen.

Das Bezugszeichen 65 kennzeichnet eine Antriebseinrichtung, welche das Schwenken der beiden Erfassungselemente 62, 64 bewirkt.

Fig. 5b zeigt einen Blick auf die Unterseite der Entfernungsvorrichtung 60. Man erkennt, dass ein Getriebemechanismus 66 vorgesehen ist, der die Bewegung des Erfassungselements 62 an die Bewegung des Erfassungselements 64 koppelt. Das Bezugszeichen 63 kennzeichnet einen Träger, an dem die beiden Erfassungselemente 62, 64 angeordnet sind. Anstelle eines Pneumatikzylinders 65 können auch andere Antriebe vorgesehen sein, wie beispielsweise elektrische Antriebe, magnetische Antriebe oder hydraulische Zylinder. Daneben könnten auch die Erfassungselemente 62, 64 nicht durch eine Schwenkbewegung aufeinander zugestellt werden, sondern durch eine geradlinige Bewegung aufeinander zu oder voneinander entfernt werden. Auch könnte eine Schwenkbewegung um eine andere Achse verlaufen, beispielsweise eine Achse, welche parallel zum Transportpfad P, P1 der Kunststoffvorformlinge verläuft.
Auch wäre eine Schwenkung des Erfassungselements in einer Ebene denkbar, die von dem Transportpfad P und der Richtung Z aufgespannt wird.

Die beiden Erfassungselemente 62, 64 sind mittels gelagerter Wellen mit Zahnsegmenten 66a, b verbunden. Das äußere Zahnsegment 66a ist, wie oben erwähnt, mit dem Antrieb 65 gekoppelt, der wiederum beispielsweise an einem Träger, wie dem Ofen für die Kunststoffvorformlinge, befestigt ist. Durch die Lagerung und das Ineinandergreifen der Zahnsegmente 66a, b öffnen (schließen) sich die Erfassungselemente 62, 64 beim Ausfahren (Einfahren) der Antriebseinrichtung 65. Um ein synchrones Öffnen und Schließen der im Radius unterschiedlichen Erfassungselemente 62, 64 zu erreichen, ist es möglich, die Zahnstufen der Zahnsegmente 66a, 66b mit einem bestimmten Übersetzungsverhältnis auszulegen.

Ein weiterer Vorteil der schaltbaren Erfassungselemente 62, 64 liegt darin, dass die Schaltzeiten und die Eingriffsdauer in Abhängigkeit der Maschinenleistung (d.h. der Transportgeschwindigkeit der Kunststoffvorformlinge) angepasst bzw. genau passend dazu eingestellt werden können. Dies erlaubt den Einsatz des Systems auch über den kompletten Leistungsbereich von derzeit auf dem Markt üblichen Anlagen.

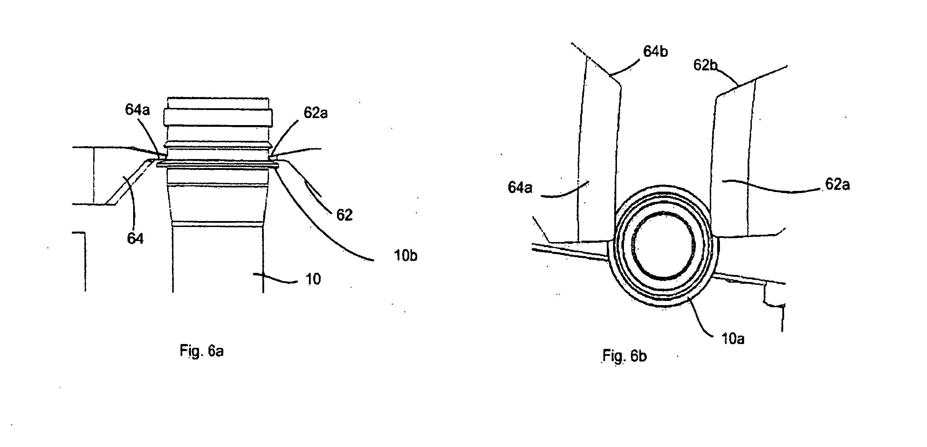

Die Figuren 6a, 6b zeigen zwei weitere Darstellungen zur Veranschaulichung der Funktionsweise der Entfernungsvorrichtung 60. Man erkennt hier in Fig. 6a wiederum die beiden Erfassungselemente 64 und 62, die hier auf das Behältnis zugestellt sind und oberhalb des Tragrings 10b des Behältnisses eingreifen. Wird nunmehr die Halteeinrichtung 2 (nicht gezeigt) nach oben abgezogen, kann der Kunststoffvorformling 10 nach unten wegfallen. Genauer ragen die beiden Erfassungselemente bzw. Abziehbacken 62, 64 auf beiden Seiten des Kunststoffvorformlings 10 bis an die Mundstücksnut heran und können somit über dem Tragringdurchmesser eingreifen. Auf diese Weise bilden die beiden Erfassungselemente 62, 64 eine Art Ringnut.

Wie in Fig. 6b dargestellt, weisen diese Erfassungselemente 62, 64 hier eine gewisse Krümmung auf, da sich die Kunststoffvorformlinge auf einer Bahnkurve bewegen. Wenn die beiden Erfassungselemente 62, 64 zusammengefahren sind, befindet sich, wie oben erwähnt, die Steuerrolle 36 in der Steigung der Steuerkurve und auf diese Weise kommt der Tragring 10b des Kunststoffvorformlings mit der Unterseite der Erfassungselemente 62, 64 in Kontakt. Jetzt ziehen die Federn 34 (vgl. Fig. 4a-4c) der Spindel aufgrund der Steigung in der Steuerkurve 50 nach oben. Der Tragring 10b befindet sich jedoch weiterhin noch unterhalb der Erfassungselemente 62, 64 und kann dadurch der Spindel 28 bzw. dem Heizdorn 22 in vertikaler Richtung, das heißt in Abzugsrichtung, nicht folgen. Da die Reibkräfte kleiner sind, als die Federkräfte, löst sich die Halteeinrichtung 2 bzw. der Heizdorn 22 aus der Mündung 10c des Kunststoffvorformlings 10.

Aufgrund des eigenen Gewichts fällt der Kunststoffvorformling nach unten.

Eine Unterstützung des Vorgangs wäre auch zusätzlich durch das Anbringen von Düsen, die mit einem Luftstrom den Kunststoffvorformling gezielt in einen Auffangbehälter befördern, denkbar. Für den Fall, dass die Reibkräfte doch höher sind, als die Federkräfte, wird eine Notkurve (ein Fangsegment) angebracht, welche die Steuerrolle 36 aufgrund ihrer Form nach oben zwingt. Somit ist auch ein Entfernen von sehr fest sitzenden Kunststoffvorformlingen gewährleistet. Falls die Erfassungselemente 62 ,64 in einem geschlossenen Zustand bleiben, kann auch im Fall einer Störung eine ganze Reihe von Kunststoffvorformlingen abgezogen werden, damit diese nicht in die Heizzone fahren. Damit kann die hier gezeigte Entfernungsvorrichtung 60 auch als Abzieheinrichtung bzw. als Ausschleuseinrichtung für eine Vielzahl von Kunststoffvorformlingen wirken.

Die Bezugszeichen 62b, 64b beziehen sich auf eine Einlaufschräge bzw. Einlaufverrundung, welche das Zuführen der Kunststoffvorformlinge in den Bereich zwischen den beiden Erfassungselementen 62, 64 erleichtert.

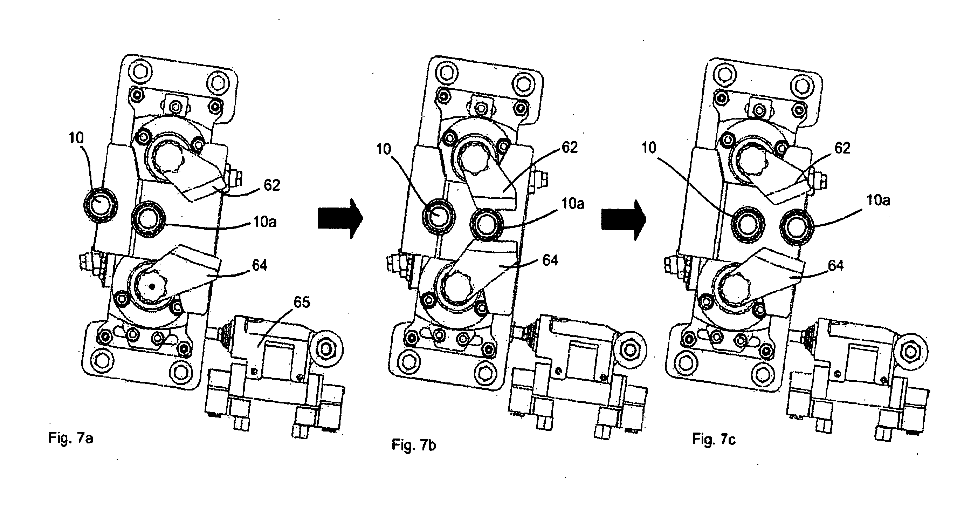

Die Figuren 7a bis 7c zeigen abermals die Durchführung des Entfernungsvorgangs. Dabei ist der jeweils in Pfeilrichtung vorne liegende Kunststoffvorformling 10a ein fehlerhafter bzw. schlecht sitzender Kunststoffvorformling und der nachliegende Kunststoffvorformling 10 ist ein ordnungsgemäßer Kunststoffvorformling. Man erkennt, (vgl. Fig. 7b), dass sich die beiden Erfassungselemente 62, 64 in dem Moment schließen, in dem der vordere Kunststoffvorformling 10a durch diese hindurchfährt. Auf diese Weise wird der vordere Kunststoffvorformling abgezogen.

Wie erwähnt, schließen sich damit die Erfassungselemente 62, 64 nur bei Auftreten eines fehlerhaften oder schlecht sitzenden Kunststoffvorformlings. Folgt ein korrekt sitzender Kunststoffvorformling, so öffnen sich die Erfassungselemente 62, 64 wieder (vgl. Fig. 7c), so dass der gute Sitz des nachfolgenden Kunststoffvorformlings 10 nicht beeinträchtigt wird.

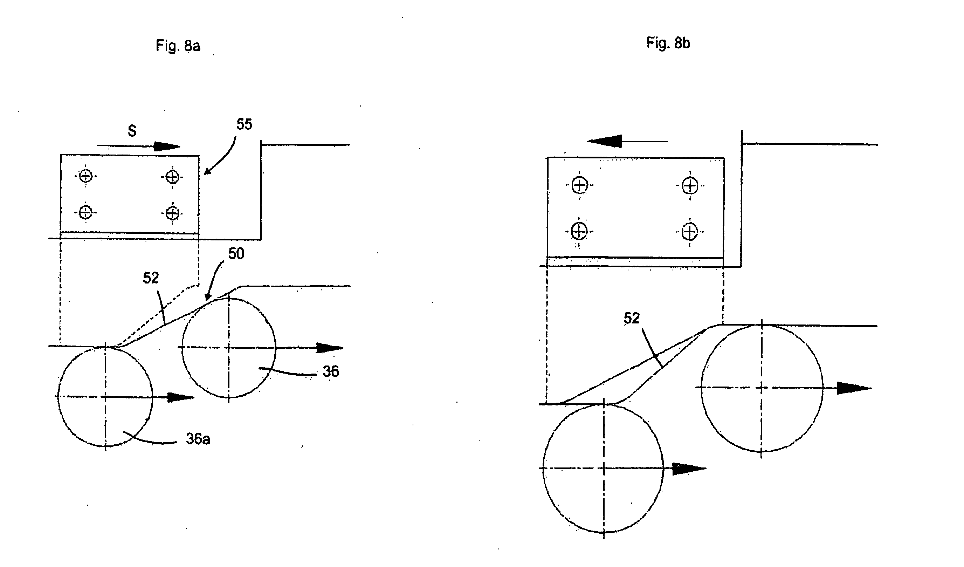

Die Figuren 8a, 8b zeigen eine weitere Möglichkeit zur Entfernung von Kunststoffvorformlingen. Bei dieser in den Figuren 8a und 8b gezeigten Ausführungsform wird die Führungskurve 50 selbst in ihrer Gestalt verändert. Zu diesem Zwecke ist eine Schalteinrichtung 55 vorgesehen, welche in der Richtung S verschoben werden kann (Diese Richtung S ist hier auch die Richtung des Transportpfades P). Durch dieses Verschieben ändert sich die Gestalt der Führungskurve 50. Wie ein Vergleich zwischen den Figuren 8a und 8b zeigt, steigt bei der in Fig. 8b gezeigten Situation die Führungskurve 50 in dem Segment 52 sehr viel schneller an als bei der in Fig. 8a gezeigten Situation.

In einem Normalfall (vgl. Fig. 8a) ist die Zusatzkurve eingefahren und die Führungsrolle 36, 36a bewegt sich auf der fest montierten Steuerkurve. Wird ein Kunststoffvorformling in einem vorgelagerten Schritt als schlecht (zum Beispiel über ein Blech, das das Höhenniveau des Kunststoffvorformlings abfragt) erkannt, wird das Schaltsegment 55 angesteuert und fährt in der Bewegungsrichtung S, das heißt hier in Fig. 8a nach rechts aus. Das Beschleunigen und Führen des Schaltsegments 55 kann auf unterschiedliche Art und Weise geschehen, beispielsweise über einen Pneumatik- oder Hydraulikzylinder. Auch könnte ein ungleichmäßig übersetztes Getriebe, insbesondere angetrieben von einem Drehmotor, verwendet werden.

Durch das Ausfahren des Schaltsegments 55 verweilt die Rolle 36a, die hier einen fehlerhaften Kunststoffvorformling bewegt und damit auch der daran angeordnete Kunststoffvorformling länger auf dem alten Höhenniveau und wird dadurch hinsichtlich des unterschiedlichen Höhenniveaus von den übrigen Kunststoffvorformlingen an dieser Stelle separiert.

Der Vorteil dieses Verfahrens liegt bei den sehr günstigen Kräfteverhältnissen. Der Antrieb des Schaltsegments 55 muss keine zusätzlichen Kräfte zum Drücken einer Feder oder ähnliches aufbringen. Daneben gibt es durch das Ausfahren in der Fahrtrichtung einen Vorteil bei der nötigen Schaltzeit.

Vorteilhaft ist also bei dieser Ausführungsform ein Schaltsegment 55 vorgesehen, welches eine Führungskurve 50 verändert und insbesondere derart verändert, dass sich ein Höhenniveau des Kunststoffvorformlings 10a, der auszuschleusen ist, im Vergleich zu voran und nachfolgenden Kunststoffvorformlingen 10 während der Bewegung entlang des Transportpfades P ändert.

Vorteilhaft handelt es sich damit um ein Schaltsegment 55, welches in eine Richtung bewegbar ist, welche zumindest eine Komponente in der Transportrichtung der Kunststoffvorformlinge aufweist oder in der Transportrichtung der Kunststoffvorformlinge verläuft.

Es wird daher bei dieser Vorgehensweise vorgeschlagen, die Halteeinrichtungen 2, an denen fehlerhafte oder nicht korrekt sitzende Kunststoffvorformlinge 10a angeordnet sind, wenigstens abschnittsweise entlang ihres Transportpfades mit einem gegenüber korrekt sitzenden Kunststoffvorformlingen unterschiedlichen Höhenniveau transportiert werden.

Vorteilhaft wird derjenige Bereich, in dem die Kunststoffvorformlinge mit dem abweichenden Höhenniveau transportiert werden, genutzt, um das Abziehen der Kunststoffvorformlinge durchzuführen oder einzuleiten. Bei einer weiteren vorteilhaften Ausführungsform ist eine Entfernungseinrichtung in einem Bereich des Transportpfades angeordnet, in dem eine Höhenposition eines auszuschließenden Kunststoffvorformlings 10a auch gegenüber vorausgehenden und nachfolgenden Kunststoffvorformlingen 10 geändert wurde. Vorteilhaft wird damit bei dieser Ausführungsform eine Führungskurve mit wenigstens einem schaltbaren Segment vorgesehen, welches für die zu transportierenden Kunststoffvorformlinge zwei Unterschiedliche Transportpfade ermöglicht, nämlich insbesondere den Transportpfad, entlang dessen ordnungsgemäße Kunststoffvorformlinge transportiert werden und einen zweiten Transportpfad, entlang dessen als fehlerhaft erkannte Kunststoffvorformlinge transportiert werden. Diese Transportpfade unterscheiden sich dabei insbesondere hinsichtlich eines Höhenniveaus der Kunststoffvorformlinge.

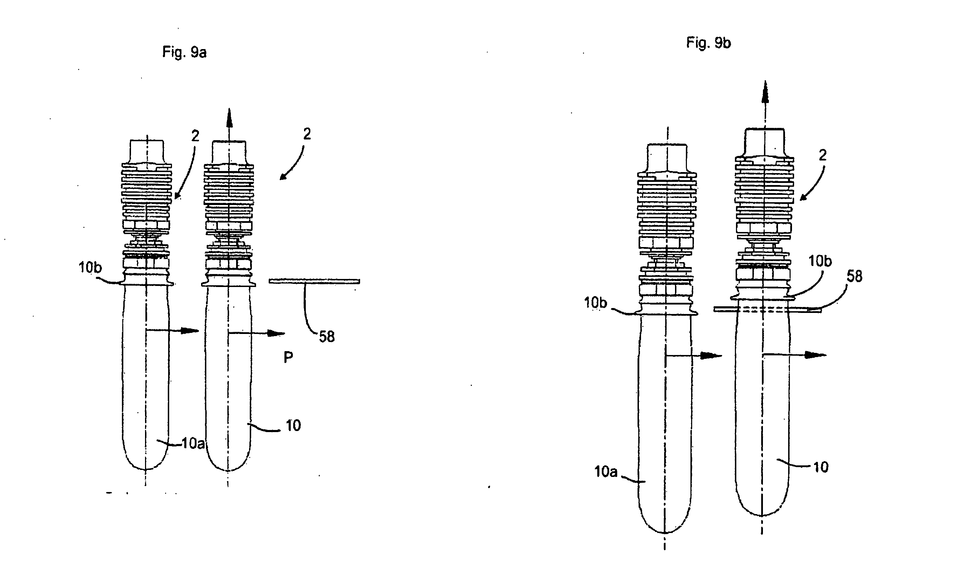

Weiterhin kann, wie oben beschrieben, durch ein irgendwie geartetes Verfahren der so ausgesonderte Kunststoffvorformling von der Halteeinrichtung 2 entfernt werden. Besonders bevorzugt ist dabei der Einsatz von - insbesondere stationär angeordneten - Abzugschienen möglich und die damit verbundene Verwendung von vorhandenen Federkräften. Diese Vorgehensweise wird unter Bezugnahme auf die nachfolgenden Figuren 9a bis 9d beschrieben.

In den Figuren 9a bis 9d sind jeweils zwei Kunststoffvorformlinge 10 und 10a dargestellt, die sich beide entlang des Transportpfades hintereinander bewegen. Dabei soll der fehlerhafte Kunststoffvorformling 10a jeweils abgezogen werden und der Kunststoffvorformling 10 nicht.

Das Bezugszeichen 58 kennzeichnet eine (stationär angeordnete) Abzugsschiene. Wie oben erwähnt, ist der vorlaufende Kunststoffvorformling 10 ein als korrekt eingestufter Kunststoffvorformling, wohingegen der dahinter laufende Kunststoffvorformling 10a als auszuscheidend von einer Erkennung eingestuft wurde. Die oben unter Bezugnahme auf die Figuren 8a und 8b beschriebene Steuerkurve befindet sich hier oberhalb der Halteeinrichtungen 2 und wurde aus Übersichtlichkeitsgründen nicht erneut dargestellt. Die Abzugsschienen 58 ragen auf beiden Seiten des Kunststoffvorformlings bis an seinen Grundkörperdurchmesser heran und ragen somit über den Tragringdurchmesser. Wie oben erwähnt, können dabei die beiden Abzugsschienen 58 jeweils eine Art Ringnut ausbilden, wobei die Krümmung vorteilhaft ist, da sie auch die Kunststoffvorformlinge im Kopfstück auf einer Bahnkurve bewegen. Vorteilhaft weisen auch die Abzugsschienen 58 eine (nicht gezeigte) Einlaufverrundung auf und reichen daher in der Bewegungsrichtung nur allmählich bis knapp an den Körper des Kunststoffvorformlings heran.

Da die Steuerrolle des vorderen Kunststoffvorformlings 10 auf der Steuerkurve abrollt, beginnt der Hub dieses Kunststoffvorformlings 10 bereits vor Erreichen der Abzugsschiene. Dadurch kommt auch der Tragring dieses ersten Kunststoffvorformlings 10 über das Niveau dieser Abzugsschiene 58, bevor die Abzugsschienen 58 über den Tragring 10b des Kunststoffvorformlings herausragen. Diese Situation ist in Fig. 9b gezeigt.

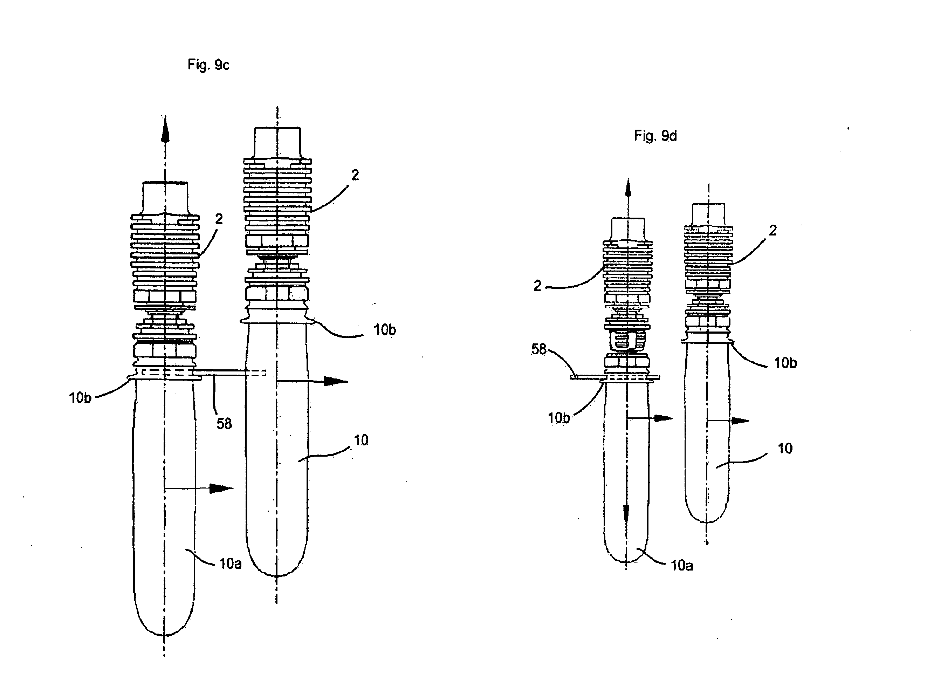

Anders ist dies bei dem abzuziehenden Kunststoffvorformling, wie unter Bezugnahme auf Fig. 9c gezeigt. Dieser bleibt durch das ausgefahrene Schaltsegment 55 länger unterhalb der Abzugsschienen 58. Damit bewegt sich die zugehörige Halteeinrichtung bzw. der Greifer 2 so weit nach vorne, bis die Abzugsschienen 58 einen Großteil des Tragrings 10b überdecken (vgl. Fig. 9c und 9d). Jetzt aber ziehen die Federn die Halteeinrichtung 2 aufgrund der Schaltsegmentform und des nun folgenden Einfahrens der Kurve auch nach oben. Jetzt ist jedoch der Tragring 10b unterhalb der Abzugsschienen 58 und kann dadurch der Halteeinrichtung 2 nicht folgen. Da die Reibkräfte kleiner als die Federkräfte sind, geht auch die Halteeinrichtung 2 aus dem Hals des Kunststoffvorformlings 10a. Diese fällt aufgrund des eigenen Gewichts nach unten. Wie oben erwähnt, kann dieser Vorgang auch beispielsweise durch Düsen unterstützt werden. Daneben ist auch eine Notsteuerkurve denkbar. Diese kann die Rolle aufgrund ihrer Form nach oben zwingen, sodass auch sehr fest sitzende Kunststoffvorformlinge sicher entfernt werden können.

Das Schaltsegment 55 ist zu diesem Zeitpunkt bereits wieder in seine Ausgangsstellung gefahren, sodass der nachfolgende Kunststoffvorformling wieder ungestört in den Heiztunnel einfahren kann. Auch wäre es möglich, dass das Schaltsegment weiter ausgefahren bleibt, wenn auch der nächste Kunststoffvorformling abgezogen werden soll. Auf diese Weise kann im Störfall auch eine Reihe von Kunststoffvorformlingen entfernt werden, damit diese nicht in den Heiztunnel einfahren.

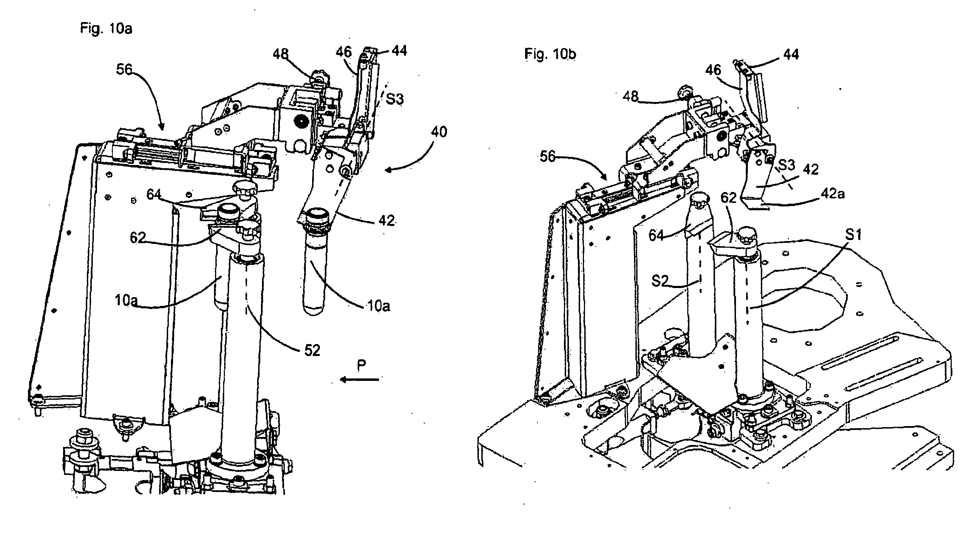

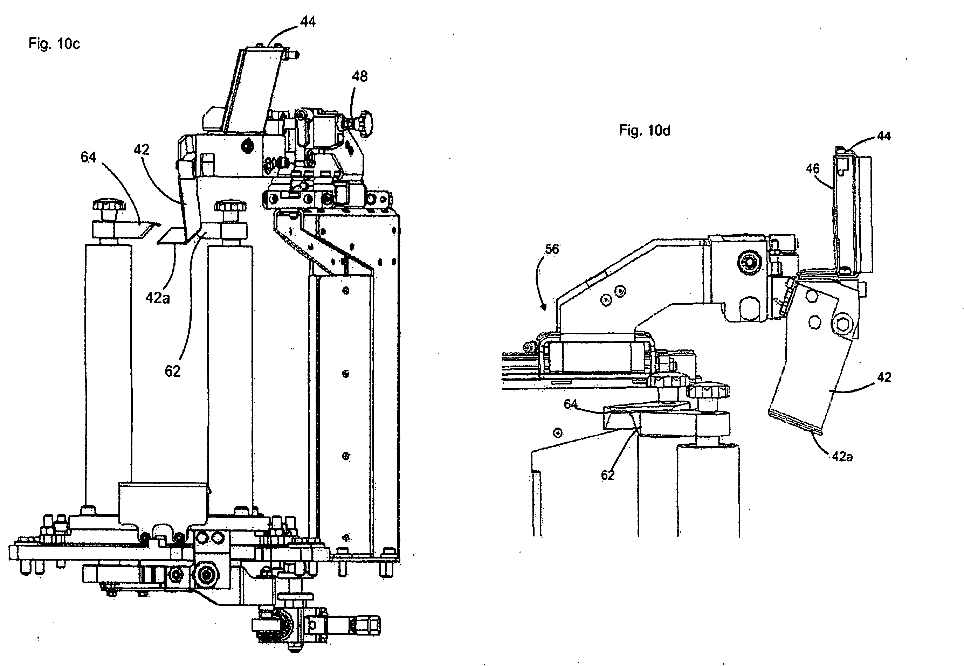

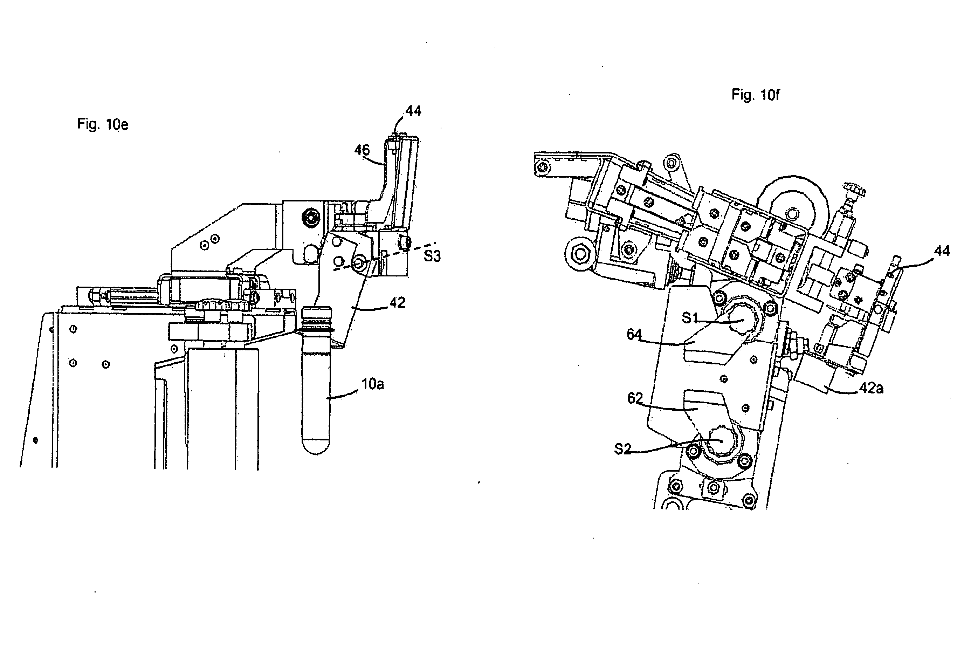

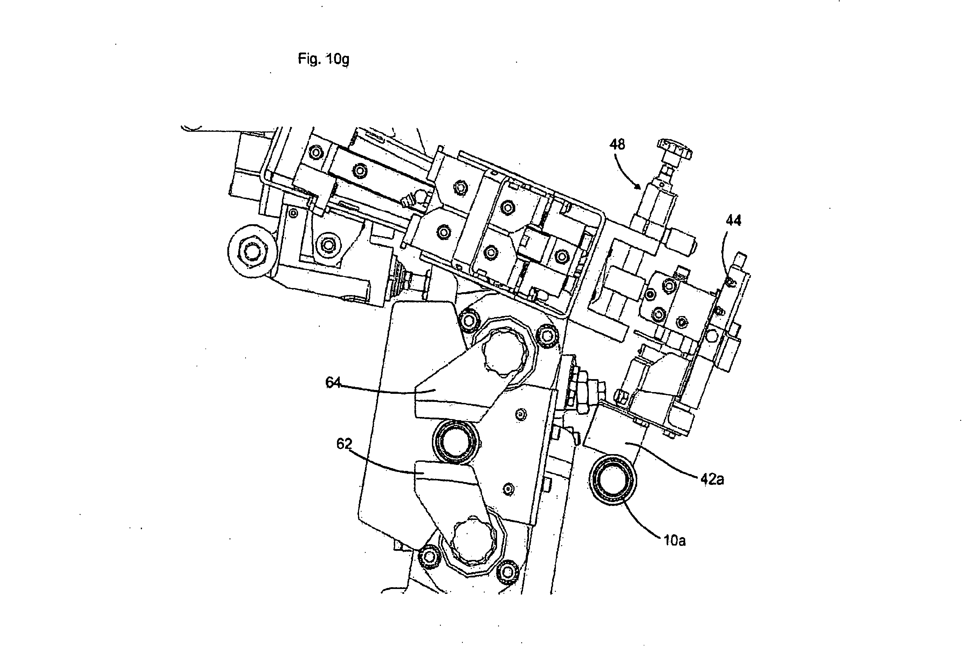

Die Figuren 10a - 10g zeigen sieben Darstellungen der erfindungsgemäßen Vorrichtung, wobei hier auch eine Erkennungseinrichtung 40 dargestellt ist, welche falsch sitzende Kunststoffvorformlinge 10a erfasst. Man erkennt, dass diese Erkennungseinrichtung 40 entlang des Transportpfads P unmittelbar vor den beiden Erfassungselementen 62, 64 angeordnet ist. Die Erkennungseinrichtung 40 weist hier eine Wippe 42 auf, welche bezüglich einer Schwenkachse S3 schwenkbar gelagert ist. Vorteilhaft steht diese Schwenkachse S3 hier senkrecht zu einem Transportpfad P der Kunststoffvorformlinge 10. Diese Wippe 42 ist mittels einer (nicht gezeigten) Federeinrichtung in die in Figur 10b gezeigte Stellung vorgespannt. An der Wippe 42 ist ein Kontaktelement 42a angeordnet, welches korrekt sitzende Kunststoffvorformlinge nicht kontaktiert, aber von schlecht sitzenden Kunststoffvorformlingen kontaktiert wird.

Infolge eines derartigen Kontakts schwenkt die Wippe 42 und mit dieser Wippe 42 ein an der Wippe angeordnetes Blech bzw. Auslöseelement 46 (dieses Blech 46 schwenkt damit ebenfalls um die Schwenkachse S3). Der Hebelarm dieses Blechs 46 ist dabei vorzugsweise länger als der Hebelarm der Wippe 42. Dies bedeutet, dass ein Schwenken des Kontaktelements 42a um eine gewisse Strecke ein Schwenken des äußersten Endes des Blechs um eine entsprechend größere Strecke nach sich zieht. Falls beispielsweise die Wippe 42 bei schlecht sitzenden Kunststoffvorformlingen einige Zehntel mm nach unten schwenkt, tritt an dem Blech 46 bzw. dessen äußerstem Ende ein Schaltabstand von ca. 1 mm auf, was als Schaltabstand ausreichend ist.

Das Blech wiederum kontaktiert einen Initiator 44 und durch diesen Kontakt wird die Antriebseinrichtung 65 angesprochen bzw. aktiviert und so werden die beiden Erfassungseinrichtungen 62, 64 auf den Kunststoffvorformling zugestellt.

Das Bezugszeichen 48 kennzeichnet ein Verstellelement, mit dessen Hilfe Wippe in einer quer zu dem Transportpfad stehenden Richtung auf den Kunststoffvorformlinge zugestellt werden kann. Da die Kunststoffvorformlinge hinsichtlich ihres Halsdurchmessers variieren, kann so die Wippe 42 auf unterschiedliche Kunststoffvorformlinge zugestellt werden.

Das Bezugszeichen 56 kennzeichnet eine weitere Verstelleinrichtung, mit deren Hilfe die Wippe näher auf die Erfassungseinrichtungen 62, 64 zu bzw. weiter von diesen weg geführt werden kann. Vorzugsweise ist die Erkennungseinrichtung 40 in einem Abstand zu der Entfernungseinrichtung 62, 64 angeordnet, der zwischen 3cm und 80cm liegt, bevorzugt zwischen 3cm und 60cm, bevorzugt zwischen 5cm und 40cm.

Die Erkennungseinrichtung ist damit bevorzugt derart ausgebildet, dass das Erkennen eines fehlerhaft sitzenden Kunststoffvorformlings unmittelbar die Entfernungseinrichtung 60 auslöst.

Es wäre jedoch, wie oben ausgeführt auch eine optische Erkennungseinrichtung denkbar. Eine derartige Erkennungseinrichtung könnte auch in größerem Abstand zu der Entfernungseinrichtung angeordnet sein und beispielsweise diejenige Halteeinrichtung identifizieren, welche einen fehlerhaft sitzenden Kunststoffvorformling trägt. Von dieser Halteeinrichtung könnte alsdann der Kunststoffvorformling entfernt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung zum Behandeln von Behältnissen
- 2: Halteeinrichtungen
- 10: Kunststoffvorformlinge
- 10a: Kunststoflvortormling, fehlerhaft
- 10b: Tragring
- 10c: Mündung
- 22: Haltedorn
- 24: Träger
- 25: Abschirmeinrichtung
- 26: Zahnrad
- 28: Spindel
- 30: Träger
- 32: Nocke
- 33: Feder
- 34: Feder
- 35: Kopfstückauszug
- 36, 36a: Steuerrollen
- 40: Erkennungseinrichtung
- 42: Wippe
- 42a: Kontaktelement
- 44: Initiator
- 46: Blech
- 48: Verstellelement

- 50: Steuerkurve, Bewegungseinrichtung, Führungskurve
- 51, 52, 53: Kurvensegmente
- 55: Schalteinrichtung
- 56: Verstelleinrichtung
- 58: (stationär angeordnete) Abzugsschiene
- 60: Entfernungseinrichtung
- 62,64: Erfassungselemente/Abziehbacken
- 62a, 64a: Kontaktabschnitte
- 62b, 64b: Einlaufschräge/Einlaufverrundung
- 63: Träger
- 65: Antriebseinrichtung/Pneumatikzylinder
- 66: Kopplungseinrichtung, Getriebemechanismus
- 66a, 66b: Zahnsegmente
- 70: zweite Entfernungseinrichtung
- 80: Anlage
- 80a: erste Heizstrecke
- 80b: zweite Heizstrecke
- 80c: Umlenkbereich
- 80d: Kopfstück
- 82: Erwärmungsvorrichtung
- 84: Heizkästen
- 86: Eintaktrad, Sägezahnstern
- 88: Ausnehmung
- 92: Zuführeinrichtung
- 94: Wandung
- 96: Transportvorrichtung
- L: Längsachse
- P1: Pfeil
- P, P1: Transportpfad
- Z: Bewegungsrichtung senkrecht zum Transportpfad
- Y: Zustellrichtung
- S: Bewegungsrichtung
- S1, S2: Schwenkachsen
- S3: Schwenkachse der Wippe 42

## Patentansprüche

1. Vorrichtung (1) zum Transportieren von Kunststoffvorformlingen (10), mit einer Vielzahl von Halteeinrichtungen (2), welche in Mündungen (10c) der Kunststoffvorformlinge (10) eingreifen und diese halten, wobei diese Halteeinrichtungen (2) entlang eines vorgegebenen Transportpfades (P) bewegbar sind, mit einem Bewegungsmechanismus (50), der bewirkt, dass die Halteeinrichtungen (2) zusätzlich zu der Bewegung entlang des Transportpfades (P) auch in einer senkrecht zu diesem Transportpfad (P) stehenden Richtung (Z) bewegbar sind,
**dadurch gekennzeichnet, dass**
die Vorrichtung (1) zumindest eine Erkennungseinrichtung (40) aufweist, welche geeignet ist, einen Fehlerzustand eines von einer Halteeinrichtung (2) gehaltenen Kunststoffvorformlings (10a) zu erkennen sowie mindestens eine entlang des Transportpfads (P) der Erkennungseinrichtung (40) nachgeordnete erste Entfemungsvorrichtung (60), die in Reaktion auf ein Signal der Erkennungseinrichtung die individuelle Entfernung dieses Kunststoffvorformlings (10a) von der ihn haltenden Halteeinrichtung (2) ermöglicht und/oder mindestens eine entlang des Transportpfads (P) der Erkennungseinrichtung (40) nachgeordnete erste Korrektureinrichtung, die in Reaktion auf ein Signal der Erkennungseinrichtung (40) eine Positionskorrektur dieses Kunststoffvorformlings (10a) gegenüber der ihn haltenden Halteeinrichtung (2) ermöglicht, wobei die zumindest eine Entfernungseinrichtung (60) wenigstens ein Erfassungselement (62, 64) zum Erfassen des Kunststoffvorformlings (10) aufweist, wobei dieses Erfassungselement (62, 64) auf den Kunststoffvorformling zustellbar ist und mindestens das erste Erfassungselement (62, 64) um eine vorgegebene Schwenkachse schwenkbar ist.

2. Vorrichtung (1) nach Anspruch 1,
**dadurch gekennzeichnet, dass**
die zumindest eine Entfernungseinrichtung (60) entlang des Transportpfades (P) der Kunststoffvorformlinge (10) stationär angeordnet ist.

3. Vorrichtung (1) nach Anspruch 1,
**dadurch gekennzeichnet, dass**
das zumindestens eine Erfassungselement zumindest auch in einer Richtung (Y) auf den Kunststoffvorformling (10) zustellbar ist, welche senkrecht zu dem Transportpfad (P) und auch senkrecht zu der vertikalen Richtung (Z) ist.

4. Vorrichtung (1) nach Anspruch 3,
**dadurch gekennzeichnet, dass**
die zumindest eine Entfernungseinrichtung (60) ein zweites Erfassungselement (64, 62) aufweist, wobei die beiden Erfassungselemente den entlang seines Transportpfades bewegten Kunststoffvorformling (10) zwischen sich aufnehmen.

5. Vorrichtung (1) nach Anspruch 4,
**dadurch gekennzeichnet, dass**
eine Kopplungseinrichtung (66) vorgesehen ist, welche die Bewegungen der Erfassungselemente (62, 64) miteinander koppett.

6. Vorrichtung (1) nach Anspruch 1,
**dadurch gekennzeichnet, dass**
der Bewegungsmechanismus eine Bewegung der Kunststoffvorformlinge (10) in der senkrecht zu dem Transportpfad (P) stehenden Richtung (Z) in demjenigen Bereich des Transportpfads bewirkt, in dem auch die zumindest eine Entfernungseinrichtung (60) angeordnet ist.

7. Vorrichtung (1) nach Anspruch 1
**dadurch gekennzeichnet, dass**
die Vorrichtung (1) eine zweite Entfernungseinrichtung zum Entfernen der Kunststoffvorformlinge aufweist.

8. Verfahren zum Transportieren von Kunststoffvorformlingen (10), wobei die Kunststoffvorformlinge mittels einer Vielzahl von Halteeinrichtungen (2), welche in Mündungen (10c) der Kunststoffvorformlinge (10) eingreifen und diese halten, entlang eines vorgegebenen Transportpfades (P) transportiert werden und wobei die Halteeinrichtungen (2) mit einem Bewegungsmechanismus (50) zusätzlich zu der Bewegung entlang des Transportpfades (P) auch in einer senkrecht zu diesem Transportpfad (P) stehenden Richtung (Z) bewegt werden,
**dadurch gekennzeichnet, dass**
mittels zumindest einer Erkennungseinrichtung (40) ein Fehlerzustand eines von einer Halteeinrichtung (2) gehaltenen Kunststoffvorformlings (10a) erkannt wird und durch mindestens eine entlang des Transportpfads (P) der zumindest einen Erkennungseinrichtung (40) nachgeordnete erste Entfernungsvorrichtung (60) in Reaktion auf ein Signal der zumindest einen Erkennungseinrichtung (40) dieser Kunststoffvorformling (10a) individuell von der ihn haltenden Halteeinrichtung (2) entfernt wird und/oder durch mindestens eine entlang des Transportpfads (P) der Erkennungseinrichtung (40) nachgeordnete erste Entfernungsvorrichtung in Reaktion auf ein Signal der Erkennungseinrichtung (40) eine Positionskorrektur dieses Kunststoffvorformlings (10a) gegenüber der ihn haltenden Halteeinrichtung (2) durchgeführt wird, wobei die zumindest eine Entfernungseinrichtung (60) wenigstens ein Erfassungselement (62, 64) zum Erfassen des Kunststoffvorformlings (10) aufweist und dieses Erfassungselement (62, 64) auf den Kunststoffvorformling zugestellt wird und mindestens das erste Erfassungselement (62, 64) um eine vorgegebene Schwenkachse geschwenkt wird.

## Claims

1. An apparatus (1) for the conveying of plastics material pre-forms (10), with a plurality of holding devices (2) which engage in apertures of the plastics material pre-forms (10) and hold them, wherein these holding devices (2) are movable along a pre-set conveying path (P), with a movement mechanism (50) which has the effect that, in addition to the movement along the conveying path (P), the holding devices (2) are also movable in a direction (Z) at a right angle to this conveying path (P), **characterized in that** the apparatus (1) has at least one capturing device (40) which is suitable for capturing a defective state of a plastics material pre-form (10a) held by a holding device (2), and at least one first removal device (60) which is arranged downstream along the conveying path (P) of the capturing device (40) and which - in reaction to a signal of the capturing device - permits the individual removal of this plastics material preform (10a) from the holding device (2) holding it and/or at least one first correction device which is arranged downstream along the conveying path (P) of the capturing device (40) and which - in reaction to a signal of the capturing device (40) - permits a correction of the position of this plastics material preform (10a) with respect to the holding device (2) holding it, wherein the at least one removal device (60) has at least one capturing element (62, 64) for capturing the plastics material preform, wherein this capturing element (62, 64) can be adapted to the plastics material preform and at least the first capturing element (62, 64) is pivotable about a predefined pivot axis.

2. An apparatus (1) according to claim 1, **characterized in that** the at least one removal device (60) is arranged so as to be stationary along the conveying path (P) of the plastics material pre-forms (10).

3. An apparatus (1) according to claim 1, **characterized in that** the at least one capturing element is capable of being supplied to the plastics material pre-form (10) at least also in a direction (Y) which is at a right angle to the conveying path (P) and also at a right angle to the vertical direction (Z).

4. An apparatus (1) according to claim 3, **characterized in that** the at least one removal device (60) has a second capturing element (64, 62), wherein the two capturing elements receive between themselves the plastics material pre-form (10) moved along the conveying path thereof.

5. An apparatus (1) according to claim 4, **characterized in that** a coupling device (66) is provided which couples the movements of the capturing elements (62, 64) to one another.

6. An apparatus (1) according to claim 1, **characterized in that** the movement mechanism causes a movement of the plastics material pre-forms (10) in the direction (Z) at a right angle to the conveying path (P) **in that** region of the conveying path in which the at least one removal device (60) is also situated.

7. An apparatus (1) according to claim 1, **characterized in that** the apparatus (1) has a second removal device for removing the plastics material pre-forms.

8. A method of conveying plastics material pre-forms (10), wherein the plastics material pre-forms are conveyed along a pre-set conveying path (P) by means of a plurality of holding devices (2) which engage in apertures (10b) in the plastics material pre-forms (10) and hold them, and wherein the holding devices (2) are also moved - in addition to the movement along the conveying path (P) - in a direction (Z) at a right angle to this conveying path (P) by means of a movement mechanism (50), **characterized in that** a defective state of a plastics material pre-form (10a) held by a holding device (2) is captured by means of at least one capturing device (40), and in reaction to a signal of the at least one capturing device (40) this plastics material pre-form (10a) is removed individually from the holding device (2) holding it by means of at least one first removal apparatus (60) arranged downstream along the conveying path (P) of the at least one capturing device (40) and/or in reaction to a signal of the capturing device (40) a correction of the position of this plastics material preform (10a) is carried out with respect to the holding device (2) holding it by means of at least one first removal apparatus arranged downstream along the conveying path (P) of the capturing device (40), wherein the at least one removal device (60) has at least one capturing element (62, 64) for capturing the plastics material preform (10) and this capturing element (62, 64) is adapted to the plastics material preform and at least the first capturing element (62, 64) is pivoted about a predefined pivot axis.

## Revendications

1. Installation (1) pour le transport de préformes en matière plastique (10), avec une pluralité de dispositifs de maintien (2) qui s'engagent dans des embouchures (10c) des préformes en matière plastique (10) et retiennent celles-ci, lesdits dispositifs de maintien (2) étant mobiles le long d'un chemin de transport (P) défini, avec un mécanisme de déplacement (50) provoquant, en plus du déplacement le long du chemin de transport (P), le déplacement des dispositifs de maintien (2) dans une direction (Z) perpendiculaire audit chemin de transport (P),
**caractérisée en ce que**
ladite installation (1) comporte au moins un dispositif de capture (40) apte à détecter un état défectueux d'une préforme en matière plastique (10a) retenue par un dispositif de maintien (2), et au moins un premier dispositif de retrait (60) disposé en aval du dispositif de capture (40) le long du chemin de transport (P), lequel permet le retrait individuel de ladite préforme en matière plastique (10a) du dispositif de maintien (2) qui la retient en réaction à un signal du dispositif de capture, et/ou au moins un premier dispositif de correction disposé en aval du dispositif de capture (40) sur le chemin de transport (P), lequel permet une correction de position de ladite préforme en matière plastique (10a) par rapport au dispositif de maintien (2) qui la retient en réaction à un signal du dispositif de capture (40), le ou les dispositifs de retrait (60) comportant au moins un élément de capture (62, 64) pour la capture de la préforme en matière plastique (10), ledit élément de capture (62, 64) pouvant être avancé vers la préforme en matière plastique, et au moins le premier élément de capture (62, 64) étant pivotant autour d'un axe de pivotement défini.

2. Installation (1) selon la revendication 1,
**caractérisée en ce que**
le ou les dispositifs de retrait (60) sont disposés fixement le long du chemin de transport (P) des préformes en matière plastique (10).

3. Installation (1) selon la revendication 1,
**caractérisée en ce que**
le ou les éléments de capture au moins peuvent également être avancés en direction (Y) de la préforme en matière plastique (10), laquelle est perpendiculaire au chemin de transport (P) et également perpendiculaire à la direction verticale (Z).

4. Installation (1) selon la revendication 3,
**caractérisée en ce que**
le ou les dispositifs de retrait (60) comportent un deuxième élément de capture (64, 62), les deux éléments de capture recevant entre eux la préforme en matière plastique (10) déplacée sur son chemin de transport.

5. Installation (1) selon la revendication 4,
**caractérisée en ce qu'**
un dispositif de couplage (66) est prévu, lequel couple entre eux les déplacements des éléments de capture (62, 64).

6. Installation (1) selon la revendication 1,
**caractérisée en ce que**
le dispositif de déplacement provoque un déplacement des préformes en matière plastique (10) dans la direction (Z) perpendiculaire au chemin de transport (P), dans la partie du chemin de transport où le ou les dispositifs de retrait (60) sont également disposés.

7. Installation (1) selon la revendication 1,
**caractérisée en ce que**
ladite installation (1) comporte un deuxième dispositif de retrait pour le retrait des préformes en matière plastique.

8. Procédé de transport de préformes en matière plastique (10), dans lequel les préformes en matière plastique sont transportés le long d'un chemin de transport (P) défini par une pluralité de dispositifs de maintien (2) qui s'engagent dans les embouchures (10c) des réformes en matière plastique (10) et retiennent celles-ci, et dans lequel les dispositifs de maintien (2) sont déplacés par un dispositif de déplacement (50) dans une direction (Z) perpendiculaire audit chemin de transport (P), en plus de l'être le long du chemin de transport (P),
**caractérisé en ce qu'**
un état défectueux d'une préforme en matière plastique (10a) retenue par un dispositif de maintien (2) est détecté par au moins un dispositif de capture (40), et ladite préforme en matière plastique (10a) est individuellement prélevée du dispositif de maintien (2) qui la retient par au moins un premier dispositif de retrait (60) disposé en aval du ou des dispositifs de capture (40) le long du chemin de transport (P), en réaction à un signal du ou des dispositifs de capture (40), et/ou une correction de position de ladite préforme en matière plastique (10a) par rapport au dispositif de maintien (2) qui la retient est effectuée par au moins un premier dispositif de correction disposé en aval du dispositif de capture (40) le long du chemin de transport (P), en réaction à un signal du dispositif de capture (40), le ou les dispositifs de retrait (60) comportant au moins un élément de capture (62, 64) pour la capture de la préforme en matière plastique (10), et ledit élément de capture (62, 64) étant avancé vers la préforme en matière plastique, et au moins le premier élément de capture (62, 64) étant pivoté autour d'un axe de pivotement défini.
